(19) Europäisches Patentamt
European Patent Office
Office européen des brevets

(11) **EP 4 428 410 A1**

(12) **EUROPÄISCHE PATENTANMELDUNG**

(43) Veröffentlichungstag:
**11.09.2024 Patentblatt 2024/37**

(21) Anmeldenummer: **24162194.5**

(22) Anmeldetag: **07.03.2024**

(51) Internationale Patentklassifikation (IPC):
**F16K 7/12** (2006.01)     **F16K 27/02** (2006.01)

(52) Gemeinsame Patentklassifikation (CPC):
**F16K 7/126; F16K 27/0236**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **09.03.2023 DE 102023105816**

(71) Anmelder: **SED Flow Control GmbH
74906 Bad Rappenau (DE)**

(72) Erfinder:
• **RUTSCH, Uwe
74670 Forchtenberg (DE)**
• **GABEL, Patrick
74906 Bad Rappenau (DE)**

(74) Vertreter: **Puschmann Borchert Kaiser Klettner
Patentanwälte Partnerschaft mbB
Bajuwarenring 21
82041 Oberhaching (DE)**

(54) **MEMBRANVENTIL**

(57)     Membranventil (10), umfassend ein Ventilgehäuse (12) mit zumindest einem Strömungskanal (18) zur Fluiddurchströmung, eine mit einem Antrieb in Wirkverbindung stehende Membran (22) als Ventilglied zur Einstellung des Strömungsquerschnitts im Strömungskanal (18), ein den Antrieb aufweisendes Aktorgehäuse (14) sowie einen Zwischenflansch (16), der in axialer Richtung zwischen dem Aktorgehäuse (14) und dem Ventilgehäuse (12) angeordnet ist, und der mittels einer ersten lösbaren Verbindung (24) lösbar mit dem Aktorgehäuse (14) verbunden ist, und der mittels mehrerer Schraubverbindungen (26) lösbar am Ventilgehäuse (12) befestigt ist, wobei die Schraubverbindungen (26) jeweils eine Schraube, eine den Zwischenflansch (16) in axialer Richtung durchdringende, eine aktorgehäuseseitige Eintrittsöffnung und eine ventilgehäuseseitige Austrittsöffnung aufweisende Durchgangsbohrung sowie eine Gewindebohrung (32) im Ventilgehäuse (12) zum Einschrauben der Schraube umfasst. Die Durchgangsbohrung weist einen sich ausgehend von der Austrittsöffnung in axialer Richtung erstreckenden ersten Bohrungsabschnitt und einen sich daran anschließenden, in axialer Richtung bis zur Eintrittsöffnung erstreckenden zweiten Bohrungsabschnitt auf, wobei der erste Bohrungsabschnitt eine Zuführöffnung zum Zuführen der Schraube in die Durchgangsbohrung sowie einen Hinterschnitt umfasst, an dem ein Kopf der Schraube in axialer Richtung anliegend gehalten ist, und wobei der zweite Bohrungsabschnitt einen Durchmesser aufweist der kleiner als der Durchmesser des Kopfes der Schraube ist und der zudem so dimensioniert ist, dass ein zum Schraubantrieb der Schraube formkompatibles Werkzeug einführbar ist.

Fig. 2

**Beschreibung**

Die Erfindung betrifft ein Membranventil gemäß der im Oberbegriff des Patentanspruches 1 angegebenen Art.

Membranventile sind aus dem Stand der Technik hinreichend bekannt und weisen in der Regel ein Aktorgehäuse, eine Membran und ein Ventilgehäuse mit mindestens einem Ein- und Auslass auf. Im Strömungskanal des Ventilgehäuses, also zwischen Ein- und Auslass, ist ein - häufig in Form eines Steges ausgebildeter - Ventilsitz angeordnet. Die oberhalb des Ventilsitzes und zwischen dem Aktor- und Ventilgehäuse angeordnete Membran dichtet über ihren äußeren Randabschnitt das Membranventil nach außen hin ab und dient als ein mit dem Ventilsitz zusammenwirkendes Ventilglied. Hierzu ist ein innerer Abschnitt der Membran mit einem im Aktorgehäuse angeordneten Antrieb verbunden, mittels dem die Membran zum Schließen des Strömungskanals auf den Ventilsitz aufgepresst oder zum Öffnen des Strömungskanals vom Ventilsitz weggezogen werden kann. Ein derartiges Membranventil ist beispielsweise aus der DE 20 2014 102 658 U1 bekannt.

Da die Membran aufgrund der wechselnden Belastung und der unterschiedlichen Medien des Prozessfluids starken Beanspruchungen unterliegt, müssen die Membrane der Membranventile regelmäßig gewechselt werden.

Das Wechseln der Membran ist häufig umständlich und der Zugang zu den Verbindungselementen schwer zugänglich, da der Platz um das eingebaute Membranventil herum durch Rohrleitungen und anderer Feldgeräte häufig verbaut ist. Ein weiterer Nachteil ist, dass die Ventilgehäuse unterschiedliche Geometrien und Schnittstellen zum Anbauen der den Antrieb aufweisenden Aktorgehäuse haben. Als Universalschnittstelle sind hierfür lösbar verbindbare Zwischenflansche bekannt. Die Zwischenflansche dienen als Schnittstelle zum Verbinden unterschiedlicher Aktorgehäuse und Ventilgehäuse. Der Zwischenflansch ermöglicht zudem, dass es nunmehr möglich ist ein einheitliches Membran-Wechselsystem für beliebige Ventilgehäusetypen zu realisieren.

Ein gattungsgemäßes, einen Zwischenflansch aufweisendes Membranventil ist in der DE 10 2020 134 305 A1 offenbart. Der Zwischenflansch ist dabei so ausgebildet, dass dieser über eine erste lösbare Verbindung lösbar mit dem Aktorgehäuse verbunden bzw. verbindbar ist und über mehrere Schraubverbindungen lösbar am Ventilgehäuse befestigt bzw. befestigbar ist. Je nach Ausgestaltung können die Schraubverbindungen dabei so ausgebildet sein, dass die Schrauben in axialer Richtung a ausgehend vom Ventilgehäuse in den Zwischenflansch bzw. alternativ ausgehend vom Zwischenflansch in das Ventilgehäuse zu verschrauben sind. Da im verbauten Zustand das Aktorgehäuse in der Regel oberhalb des Ventilgehäuses angeordnet ist, wird die erst genannte Alternative der Schraubverbindung, gemäß der die Schraube das Ventilgehäuse durchfassend in den Zwischenflansch eingeschraubt ist, nachfolgend als "Verschraubung von unten" und entsprechend die zweit genannte Alternative, gemäß der die Schraube den Zwischenflansch durchfassend in das Ventilgehäuse eingeschraubt ist, nachfolgend als "Verschraubung von oben" bezeichnet.

Ein bekanntes Problem dabei ist, dass aufgrund des beengten Bauraums eine Zugänglichkeit zu den Schrauben von der Unterseite des Ventilgehäuses für eine Verschraubung von unten nicht immer gewährleistet ist und dass - um eine Verschraubung von oben zu ermöglichen - oftmals der Zwischenflansch in radialer Richtung r betrachtet nicht ausreichend Bauteilfläche aufweist, um die für das Einsetzen der Schrauben erforderliche Bohrung vorsehen zu können.

Der Erfindung liegt die Aufgabe zugrunde ein Membranventil gemäß der im Oberbegriff des Patentanspruches 1 angegebenen Art derart weiterzubilden, dass auch für Zwischenflansche mit geringer radialer Erstreckung, eine Verschraubung von oben, also Verschraubung des Zwischenflansches mittels mehrerer, den Zwischenflansch durchfassender und in das Ventilgehäuse zu verschraubenden Schrauben, ermöglicht ist.

Diese Aufgabe wird durch die kennzeichnenden Merkmale des Patentanspruches 1 in Verbindung mit seinen Oberbegriffsmerkmalen gelöst.

Die Unteransprüche 2 bis 13 bilden vorteilhafte Weiterbildungen des erfindungsgemäßen Membranventils.

In bekannter Art und Weise umfasst das Membranventil ein Ventilgehäuse mit zumindest einem Strömungskanal zur Fluiddurchströmung, eine mit einem Antrieb in Wirkverbindung stehende Membran als Ventilglied zur Einstellung des Strömungsquerschnitts im Strömungskanal, ein den Antrieb aufweisendes Aktorgehäuse sowie einen Zwischenflansch. Der Zwischenflansch ist dabei in axialer Richtung a betrachtet zwischen dem Aktorgehäuse und dem Ventilgehäuse angeordnet und ist über eine erste lösbare Verbindung lösbar mit dem Aktorgehäuse verbunden bzw. verbindbar und über mehrere Schraubverbindungen lösbar am Ventilgehäuse befestigt bzw. befestigbar. Die mehreren Schraubverbindungen umfassen dabei - in bekannter Art und Weise - jeweils eine Schraube, eine den Zwischenflansch in axialer Richtung a durchdringende, eine aktorgehäuseseitige Eintrittsöffnung und eine ventilgehäuseseitige Austrittsöffnung aufweisende Durchgangsbohrung sowie eine Gewindebohrung im Ventilgehäuse zum Einschrauben der Schraube in das Ventilgehäuse.

Erfindungsgemäß ist nunmehr vorgesehen, dass die Durchgangsbohrung einen sich ausgehend von der Austrittsöffnung in axialer Richtung a erstreckenden ersten Bohrungsabschnitt und einen sich daran anschließenden, in axialer Richtung a bis zur Eintrittsöffnung erstreckenden zweiten Bohrungsabschnitt aufweist. Erfindungsgemäß ist zudem vorgesehen, dass der erste Bohrungsabschnitt eine Zuführöffnung zum Zuführen der Schraube in die Durchgangsbohrung sowie einen, eine axiale Anlagefläche bildenden Hinterschnitt umfasst, an dem ein Kopf der Schraube in axialer Richtung anliegend gehalten ist, und dass der zweite Bohrungsabschnitt so ausgebildet ist, dass dieser einen Durchmesser $d_{B2}$ aufweist, der kleiner als der Durchmesser des Kopfes der Schraube ist und der zudem so dimensioniert ist, dass über die Eintrittsöffnung ein zum Schraubantrieb der Schraube formkompatibles Werkzeug einführbar und - den zweiten Bohrabschnitt durchfassend - zu dem, den Schraubantrieb aufweisenden Kopf der Schraube zuführbar ist. Mit anderen Worten, für den Durchmesser $d_{B2}$ des zweiten Bohrabschnitts gilt:

$$d_W < d_{B2} < d_K$$

wobei mit

$d_K$ der Durchmesser des den Schraubantrieb aufweisen Kopfes der Schraube, und mit

$d_W$ der Durchmessers des zum Verschrauben der Schraube erforderlichen Werkzeugs bezeichnet ist.

Die erfindungsgemäße Ausgestaltung hat den Effekt, dass - da das Zuführen der Schrauben nicht mehr über die aktorgehäuseseitigen Eintrittsöffnungen erfolgt und damit die Eintrittsöffnungen lediglich als Montageöffnung für das Zuführen eines zum Festziehen der Schrauben notwendigen Werkzeugs dienen - nunmehr die aktorgehäuseseitigen Eintrittsöffnungen wesentlich kleiner dimensioniert werden können. D.h., es wird in vorteilhafter Weise weniger Bauraum in radialer Richtung benötigt, sodass auch für Zwischenflansche mit geringer radialer Erstreckung, eine Verschraubung von oben ermöglicht ist.

Besonders bevorzugt ist dabei vorgesehen, dass die Eintrittsöffnung und der sich daran anschließende zweite Bohrungsabschnitt so dimensioniert sind, dass ein zum Festziehen der Schrauben notwendiges Werkzeug in radialer Richtung nahezu spielfrei zuführbar ist. Beispielsweise in der Gestalt, dass der Durchmesser $d_{B2}$ maximal 5% größer als der Durchmesser des Werkzeugs ist, also $d_W < d_{B2} \leq 1,05\ d_W$ Hierdurch ist eine in radialer Richtung r besonders bauraumsparende Ausgestaltung der aktorgehäuseseitigen Oberfläche des Zwischenflansches sichergestellt.

Gemäß einer Ausführungsform der Erfindung sind die Zuführöffnungen zum Zuführen der Schrauben in den Durchgangsbohrungen in Form von sich ausgehend von einer inneren Umfangsfläche des Zwischenflansches radial nach außen zum ersten Bohrabschnitt der Durchgangsbohrungen hin erstreckende Ausnehmungen ausgebildet. Diese Ausführungsform erweist sich als vorteilhaft, da hierdurch das Auftreten eines - für die typische Anwendung von Membranventilen ungünstiger-Luftspalt zwischen Aktorgehäuse und Zwischenflansch ausgeschlossen ist.

Eine alternative zweite Ausführungsform sieht vor, dass die Zuführöffnungen in Form von sich ausgehend von einer äußeren Umfangsfläche des Zwischenflansches radial nach innen zum ersten Bohrabschnitt der Durchgangsbohrung hin erstreckende Ausnehmungen ausgebildet sind. Vorteilhaft dabei ist, dass - da das Zuführen der Schrauben über die leichter zugängliche äußere Umfangsfläche des Zwischenflansches erfolgt - ein vereinfachtes und schnelleres Zuführen der Schrauben ermöglicht ist.

Lediglich der Vollständigkeit halber wird darauf hingewiesen, dass die sich in radialer Richtung erstreckende Ausnehmungen - um das Einführen der Schrauben zu ermöglichen - eine Öffnungsweite aufweisen, die größer als der Durchmesser des Kopfes der Schraube ist, und zudem so angeordnet sind, dass über die Ausnehmungen die Köpfe der Schrauben auf den jeweiligen, durch den Hinterschnitt gebildeten axialen Anlageflächen aufliegend positionierbar sind.

Bevorzugt ist dabei vorgesehen, dass den sich in radialer Richtung r erstreckenden Ausnehmungen jeweils ein Verschlusselement zugeordnet ist, mittels denen - nach Zuführen der Schrauben und Positionieren der Köpfe der Schrauben auf den axialen Anlageflächen - die entsprechenden Öffnungen in der inneren bzw. äußeren Umfangsfläche des Zwischenflansches verschließbar sind. Hierdurch ist ein breiteres Einsatzspektrum des Membranventils, insbesondere auch ein Einsatz in der Pharma- oder Lebensmittelindustrie sichergestellt.

Gemäß einer dritten Ausführungsform sind die Zuführöffnungen in Form von Sacklöchern ausgebildet, die sich ausgehend von der, die Austrittsöffnungen der Durchgangsbohrungen aufweisenden Zwischenflanschunterseite axial in Richtung zur Eintrittsöffnung hin erstreckend ausgerichtet sind. Vorteilhaft an dieser Ausführungsform ist, dass nach erfolgter Befestigung des Zwischenflansches am Ventilgehäuse, die Zuführöffnungen verschlossen sind, sodass ein Eindringen von Schmutz etc. nicht möglich ist.

Auch in Bezug auf die dritte Ausführungsform wird lediglich der Vollständigkeit halber darauf hingewiesen, dass die Sacklöcher - um das Einführen der Schrauben zu ermöglichen - einen Durchmesser aufweisen, der größer als der Durchmesser des Kopfes der Schraube ist, und zudem so angeordnet sind, dass über die Sacklöcher die Köpfe der Schrauben auf den jeweiligen, durch den Hinterschnitt gebildeten axialen Anlageflächen aufliegend positionierbar sind.

Vorzugsweise ist dabei die als Sackloch ausgebildete Zuführöffnung derart in Umfangsrichtung u betrachtet benachbart zum ersten Bohrabschnitt der Durchgangsbohrung angeordnet, dass die Sacklochöffnung und die durchgangsbohrungsseitige Austrittsöffnung teilweise ineinander übergehen, sodass die sich ergebende Austrittsöffnung langlochartig ausgebildet ist. Vorteilhaft dabei ist, dass aufgrund der langlochartigen Gestaltung eine gute Zugänglich sichergestellt ist, sodass das Einführen der Schrauben als auch das Positionieren der Köpfe der Schrauben schnell und einfach durchführbar ist.

Gemäß einer weiteren bevorzugten Ausgestaltung der dritten Ausführungsform ist dabei vorgesehen, dass der Zwischenflansch zumindest zwei langlochartig ausgebildete Austrittsöffnungen aufweist, die punktsymmetrisch zu einem auf einer Längsachse des Zwischenflansches liegenden Symmetriepunktes SP angeordnet sind. Durch die punktsymmetrische Anordnung zumindest zweier langlochartig ausgebildeter Austrittsöffnungen ist sichergestellt, dass - wenn die in den zugeordneten Durchgangsbohrungen angeordneten Schrauben im Eingriff mit den Gewindebohrungen stehen - der Zwischenflansches in Bezug zum Ventilgehäuse drehfest fixiert ist. D.h. ein beim Befestigungsvorgang unerwünschtes Verdrehen des Zwischenflansches zum Ventilgehäuse wird erfolgreich verhindert.

Eine weitere besonders bevorzugte Ausführungsform des Membranventils sieht vor, dass der erste Bohrabschnitt eine axiale Erstreckung $L_{B1}$ aufweist, für die gilt:

$$ L_{B1} / L_S \geq 1 $$

wobei mit Ls die Schraubenlänge, ausgehend vom Kopf bis zum gegenüberliegenden Ende, der zu verschraubenden Schraube bezeichnet ist.

Hierdurch ist in vorteilhafter Weise sichergestellt, dass die Schrauben vollständig im ersten Bohrabschnitt und damit im Zwischenflansch gehalten sind, sodass bei der Montage der Zwischenflansch bündig auf das Ventilgehäuse aufgesetzt werden kann und anschließend die Schrauben in beliebiger Reihenfolge einzeln verschraubt werden können.

Eine weitere vorteilhafte Ausführungsform der Erfindung sieht ein Befestigungsmittel vor, das nach entsprechender Positionierung der Schraube in der Durchgangsbohrung anzuordnen ist, und das derart ausgebildet ist, dass der Kopf der Schraube positionsgetreu, auf der durch den Hinterschnitt gebildeten axialen Anlagefläche aufliegend, fixiert gehalten ist. Hierdurch ist sichergestellt, dass nach Einsetzen der Schrauben ein Verschieben der Köpfe der Schrauben und damit gegebenenfalls ein Rausfallen der Schrauben verhindert wird.

Das Befestigungsmittel kann dabei auf unterschiedliche Art und Weise ausgebildet sein, beispielsweise in Form einer Halteklammer oder auch in Form eines Stopfens.

Vorzugsweise ist der Schraubantrieb der Schraube als ein Innenantrieb, insbesondere als Längsschlitz, Kreuzschlitz, Innensechskant, Torx oder Inbus, ausgebildet.

Auch die erste lösbare Verbindung, also die Verbindung mittels derer der Zwischenflansch mit dem Aktorgehäuse verbunden ist, kann auf unterschiedliche Art und Weise ausgebildet. Vorzugsweise ist jedoch die erste lösbare Verbindung in Form einer Überwurfmutter ausgebildet. D.h., die radial äußere Umfangsfläche des Zwischenflansches weist ein zum Innengewinde der Überwurfmutter korrespondierendes Außengewinde auf, sodass mittels Verschrauben der Überwurfmutter die Bauteile Aktorgehäuse und Zwischenflansch miteinander verbindbar sind. Die Ausbildung der ersten lösbaren Verbindung als Überwurfmutter erweist sich als vorteilhaft, da lediglich ein zentrales Element, nämlich die Überwurfmutter, zu betätigen ist, sodass eine einfache und schnelle Montage bzw. Demontage gewährleistet ist.

Der Erfindung liegt des Weiteren die Aufgabe zugrunde, ein Verfahren zur Befestigung eines Aktorgehäuses eines Membranventils an ein festverbautes Ventilgehäuse des Membranventils, anzugeben, wobei das Membranventil nach einem der Ansprüche 1 bis 13 ausgebildet ist.

Diese Aufgabe wird durch Patentanspruch 14 gelöst.

Das erfindungsgemäße Verfahren umfasst die nachfolgenden Verfahrensschritte:

a) Zuführen der Schrauben über die Zuführöffnungen in den ersten Bohrabschnitt der Durchgangsbohrungen;
b) Positionieren der Schrauben, sodass der Kopf der Schrauben jeweils auf der axialen Anlagefläche axial aufliegend gehalten ist;
c) Aufsetzen des Zwischenflansches auf das Ventilgehäuse;
d) Zuführen eines zum Schraubantrieb der Schraube formkompatibles Werkzeug über eine aktorgehäuseseitige Eintrittsöffnung zum Kopf einer Schraube;
e) Festdrehen der Schraube mit dem Werkzeug;
f) Wiederholen der Schritte d) und e) bis alle Schrauben festgedreht sind;
g) Aufsetzen des Aktorgehäuses auf den Zwischenflansch und Befestigen des Aktorgehäuses am Zwischenflansch über die erste lösbare Verbindung.

Weitere Vorteile und Anwendungsmöglichkeiten der vorliegenden Erfindung ergeben sich aus der nachfolgenden Beschreibung in Verbindung mit den in der Zeichnung dargestellten Ausführungsbeispielen.

In der Beschreibung, in den Ansprüchen und in der Zeichnung werden, die in der unten aufgeführten Liste der Bezugszeichen verwendeten Begriffe und zugeordneten Bezugszeichen verwendet.

In der Zeichnung bedeutet:

Fig. 1    ein erfindungsgemäßes Membranventil in einer Ansicht schräg von oben;

Fig. 2    eine Schnittdarstellung des Membranventils aus Fig. 1;

Fig. 3    der Zwischenflansch aus Fig. 2 als Einzelheit;

Fig. 4    der Zwischenflansch aus Fig. 3 in einer Ansicht von unten;

Fig. 5    der Zwischenflansch aus Fig. 3 in einer Ansicht schräg von unten,

Fig. 6    eine andere Ausführungsform des Zwischenflansches in einer Ansicht schräg von unten,

Fig. 7    der Zwischenflansch aus Fig. 6 mit eingesetzten Schrauben und Befestigungsmittel in einer Ansicht von schräg von unten;

Fig. 8    eine Ansicht von unten des Zwischenflansches aus Fig. 7;

Fig. 9    eine Schnittdarstellung entlang F-F aus Fig. 8;

Fig. 10   eine Schnittdarstellung entlang G-G aus Fig. 8, und

Fig. 11   eine Schnittdarstellung entlang O-O aus Fig. 10.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

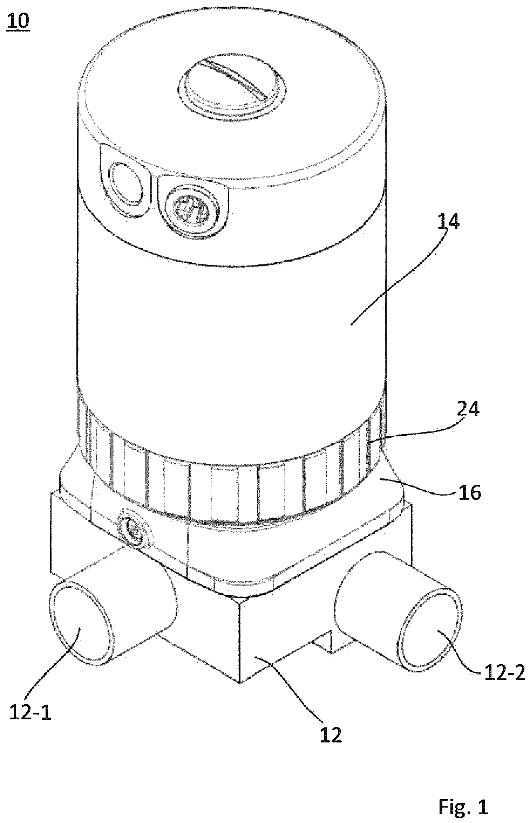

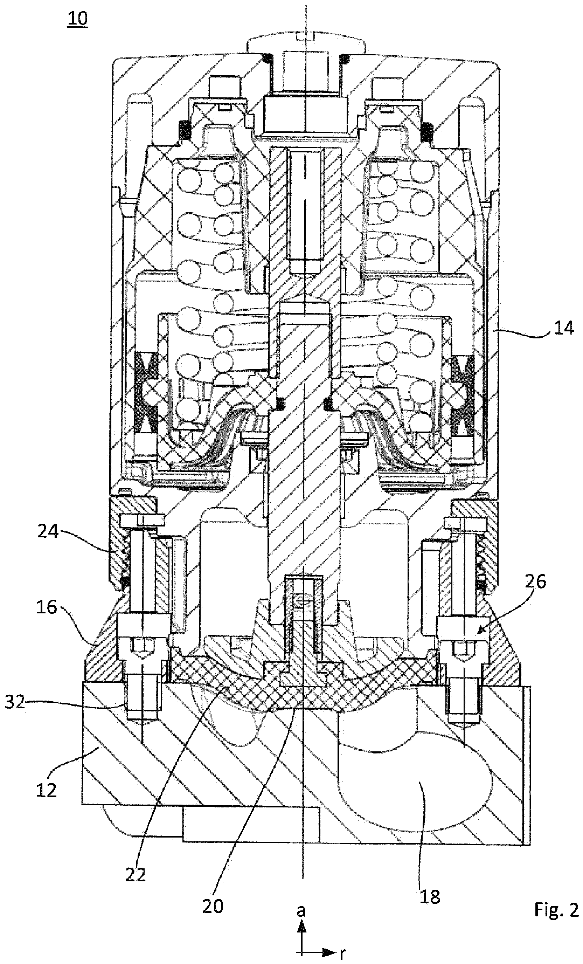

Fig. 1 und 2 zeigen ein insgesamt mit der Bezugsziffer 10 bezeichnetes Membranventil. Das Membranventil 10 umfasst im Wesentlichen ein Ventilgehäuse 12, ein Aktorgehäuse 14 sowie einen in axialer Richtung a betrachtet zwischen dem Ventil- und Aktorgehäuse 12, 14 angeordneten Zwischenflansch 16. Über den Zwischenflansch 16 sind das Ventil- und Aktorgehäuse 12, 14 lösbar miteinander verbunden.

Das Ventilgehäuse 12 weist einen Ein- und Auslass 12-1, 12-2 sowie einen im Strömungskanal 18 des Ventilgehäuses 12 angeordneten Ventilsitz 20 auf. Im Aktorgehäuse 14 ist ein mit einer Membran 22 in Wirkverbindung stehender Antrieb integriert, über den die Membran 22 - wie in Fig. 2 dargestellt - zum Schließen des Ventils auf den Ventilsitz 20 aufpresst werden kann oder vice versa - zum Öffnen des Ventils - vom Ventilsitz 20 weggezogen werden kann.

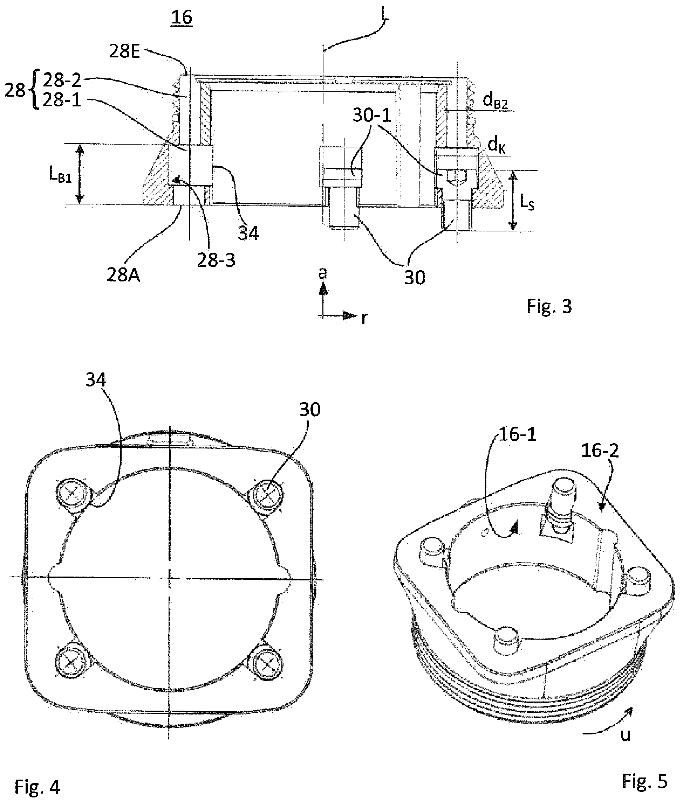

Die lösbare Verbindung zwischen dem Aktorgehäuse 12 und dem Zwischenflansch 16 - im Folgenden auch als erste lösbare Verbindung bezeichnet - ist vorliegend in Form einer Überwurfmutter 24 ausgebildet. Die ventilgehäuseseitige Befestigung des Zwischenflansches 16 am Ventilgehäuse 12 erfolgt über mehrere, mit der Bezugsziffer 26 bezeichneten Schraubverbindungen. Vorliegend sind vier Schraubverbindungen 26 vorgesehen, vgl. Fig. 4, Fig. 5.

Wie Fig. 2 und Fig. 3 zu entnehmen ist, umfassen die Schraubverbindungen 26 jeweils eine den Zwischenflansch 16 durchfassende Durchgangsbohrung 28, eine Schraube 30 sowie eine Gewindebohrung 32 im Ventilgehäuse 12 zum Einschrauben der Schraube 30. Die dem Aktorgehäuse 14 zugewandte Eintrittsöffnung der Durchgangsbohrung 28 ist mit der Bezugsziffer 28E und die dem Ventilgehäuse 12 zugewandte Austrittsöffnung ist mit der Bezugsziffer 28A bezeichnet.

Die die Austrittsöffnungen 28A aufweisende Zwischenflanschunterseite des Zwischenflansches 16 ist mit der Bezugsziffer 16-2, vgl. Fig. 5, und die Längsachse des Zwischenflansches 16 ist mit dem Bezugszeichen L bezeichnet, vgl. Fig. 3.

Wie Fig. 3 zu entnehmen ist, ist die Durchgangsbohrung 28 dabei so ausgebildet, dass diese zwei Bohrungsabschnitte mit unterschiedlichen Durchmessern umfasst, nämlich einen ersten Bohrungsabschnitt 28-1, der sich ausgehend von der Austrittsöffnung 28A axial nach oben erstreckt und einen sich an ersten Bohrungsabschnitt 28-1 anschließenden, axial nach oben bis zur Eintrittsöffnung 28E erstreckender zweiter Bohrungsabschnitt 28-2.

Dabei ist, wie Fig. 3 zeigt - die Schraube 30 im ersten Bohrungsabschnitt 28-1 haltend aufgenommen. Hierzu umfasst der erste Bohrungsabschnitt 28-1 einen Hinterschnitt 28-3; auf der durch den Hinterschnitt 28-3 gebildeten axialen Anlagefläche ist die Schraube 30 über ihren Schraubkopf 30-1 axial anliegend gehalten. Die Zuführung der Schraube 30 zum ersten Bohrungsabschnitt 28-1 erfolgt über eine Zuführöffnung, die - gemäß der in Fig. 2 bis 5 dargestellten ersten Ausführungsform - in Form einer Ausnehmung 34 ausgebildet ist, und die sich ausgehend von der inneren Umfangsfläche 16-1 des Zwischenflaches 16 radial nach außen erstreckt.

Da, wie ausgeführt, die Schraube 30 über die Ausnehmung 34 in die Durchgangsbohrung 28 zugeführt wird, kann die Eintrittsöffnung 28E und der sich daran anschließende zweite Bohrungsabschnitt 28-2 mit einem kleineren Durchmesser als der Kopf 30-1 der Schraube 30 ausgebildet werden. Wie Fig. 3 zeigt, ist der mit dem Bezugszeichen $d_{B2}$ bezeichnet Durchmesser des zweiten Bohrungsabschnitts 28-2 deutlich kleiner dimensioniert, als der mit dem Bezugszeichen $d_k$ bezeichnet Durchmesser des Kopfes 30-1 der Schraube 30. Der Durchmesser $d_{B2}$ ist jedoch noch so ausreichend groß zu dimensionieren, dass über die Einführöffnung 28E und zweiter Bohrabschnitt 28-2 ein zum Innenantrieb der Schraube 30 formkompatibles Werkzeug zum Festdrehen der Schraube 30 zuführbar ist. Vorliegend ist der Innenantrieb als ein Inbus ausgebildet.

Wie Fig. 3 weiter zu entnehmen ist, weist der erste Bohrungsabschnitt 28-1 eine Länge $L_{B1}$ auf, die größer als die Länge Ls der Schraube 30 ist. D.h. die Schrauben 30 sind vollständig im zweiten Bohrabschnitt 28-1 aufgenommen, sodass bei der Montage der Zwischenflansch 16 bündig auf das Ventilgehäuse 12 aufgesetzt werden kann.

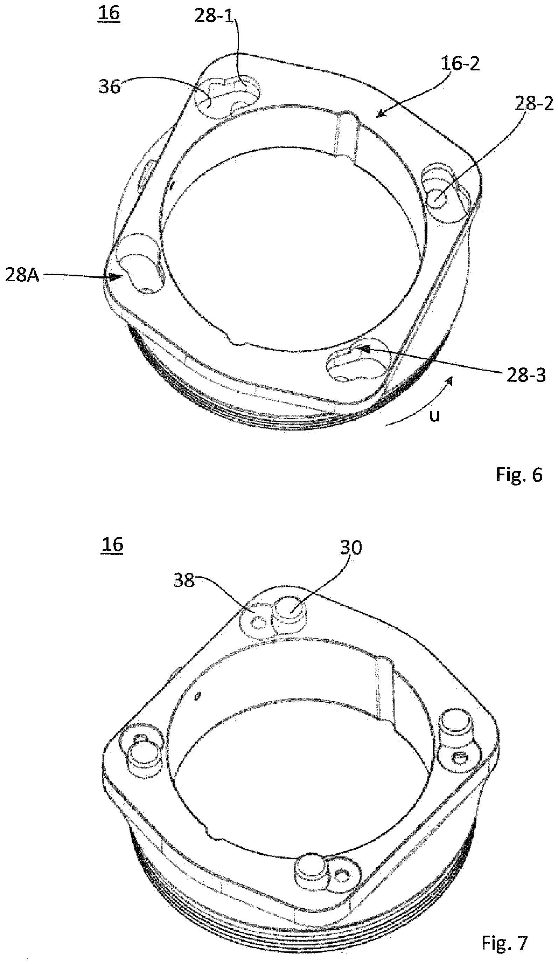

Die in Fig. 6 bis 11 gezeigte zweite Ausführungsform zeichnet sich dadurch aus, dass die Zuführöffnung zum Einführen der Schrauben 30 in die Durchgangsbohrungen 28 anders ausgebildet ist:
Wie insbesondere aus Fig. 6 ersichtlich, ist gemäß der zweiten Ausführungsform die Zuführöffnung in Form eines Sackloches 36 ausgebildet, das sich - ausgehend von der Zwischenflanschunterseite 16-2 - axial nach oben erstreckt und das in Umfangsrichtung u betrachtet derart benachbart zum ersten Bohrabschnitt 28-1 der Durchgangsbohrung 28 angeordnet ist, dass die Sacklochöffnung und die durchgangsbohrungsseitige Öffnung teilweise ineinander übergehen, sodass die daraus resultierende Austrittsöffnung 28A langlochartig ausgebildet ist.

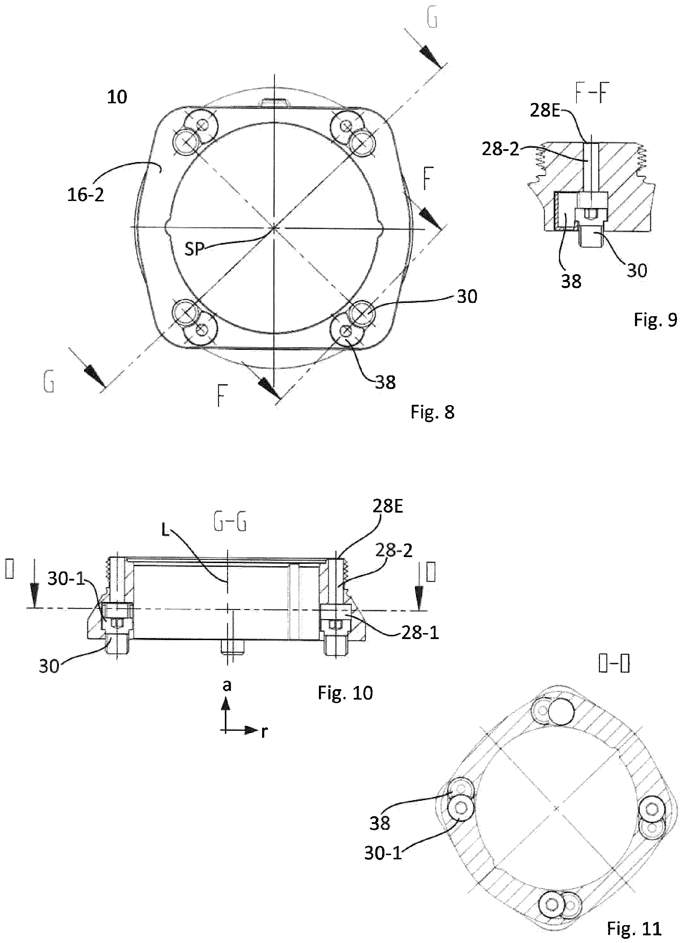

Vorliegend sind wiederum vier Schraubverbindungen vorgesehen, die in Umfangsrichtung u betrachtet gleichmäßig verteilt angeordnet sind. D.h., die Zwischenflanschunterseite 16-2 weist entsprechend vier langlochartige Austrittsöffnungen 28A auf, die - aufgrund der über den Umfang gleichmäßig verteilten Anordnung - sich paarweise gegenüberliegen. Wie insbesondere aus Fig. 8 ersichtlich, sind dabei die sich paarweise gegenüberliegenden, langlochartigen Austrittsöffnungen 28A punktsymmetrisch zu einem auf einer Längsachse L des Zwischenflansches 16 liegenden Symmetriepunktes SP angeordnet. Hierdurch ist sichergestellt, dass der Zwischenflansch 16 in Bezug zum Ventilgehäuse 12 drehfest fixiert ist, sobald zwei der vier Schrauben 30 in der ventilgehäuseseitigen Gewindebohrung verschraubt sind. D.h. ein unerwünschtes Verdrehen des Zwischenflansches 16 in Bezug zum Ventilgehäuse 12 bei der Montage wird unterbunden.

Um nach Einsetzen der Schraube 30 und Positionieren des Schraubkopfes 30-1 auf der durch den Hinterschnitt 28-3 gebildeten axialen Anlagefläche ein Verrutschen bzw. ein Herausfallen der Schrauben 30 zu vermeiden, sind die Schrauben 30 mittels eines Befestigungselements fixiert im ersten Bohrungsabschnitt 28-1 gehalten. Das Befestigungselement ist vorliegend in Form eines Stopfens 38 ausgebildet, über den - wie insbesondere Fig. 9 zu entnehmen ist - der Schraubkopf 30-1 der Schraube 30 positionsgetreu auf der der durch den Hinterschnitt 28-3 gebildeten axialen Anlagefläche gehalten ist.

**Bezugszeichenliste**

| | |
|---|---|
| 10 | Membranventil |
| 12 | Ventilgehäuse |
| 12-1 | Einlass |
| 12-2 | Auslass |
| 14 | Aktorgehäuse |
| 16 | Zwischenflansch |
| 16-1 | innere Umfangsfläche des Zwischenflansches |
| 16-2 | Zwischenflanschunterseite |
| 18 | Strömungskanal |
| 20 | Ventilsitz |
| 22 | Membran |
| 24 | Überwurfmutter |
| 26 | Schraubverbindung |
| 28 | Durchgangsbohrung |
| 28E | Eintrittsöffnung |
| 28A | Austrittsöffnung |
| 28-1 | erster Bohrungsabschnitt |
| 28-2 | zweiter Bohrungsabschnitt |
| 28-3 | Hinterschnitt |
| 30 | Schraube |
| 30-1 | Kopf der Schraube |
| 32 | Gewindebohrung |
| 34 | Ausnehmung |
| 36 | Sackloch |
| 38 | Stopfen |
| a | axial |
| r | radial |
| $L_{B1}$ | Länge des ersten Bohrungsabschnitts |
| $L_S$ | Länge der Schraube |
| $d_{B2}$ | Durchmesser des zweiten Bohrungsabschnitts |
| $d_K$ | Durchmesser des Kopfes der Schraube |

L      Längsachse
SP     Symmetriepunkt

**Patentansprüche**

1. Membranventil (10), umfassend ein Ventilgehäuse (12) mit zumindest einem Strömungskanal (18) zur Fluiddurchströmung, eine mit einem Antrieb in Wirkverbindung stehende Membran (22) als Ventilglied zur Einstellung des Strömungsquerschnitts im Strömungskanal (18), ein den Antrieb aufweisendes Aktorgehäuse (14) sowie einen Zwischenflansch (16), der in axialer Richtung (a) zwischen dem Aktorgehäuse (14) und dem Ventilgehäuse (12) angeordnet ist, und der mittels einer ersten lösbaren Verbindung (24) lösbar mit dem Aktorgehäuse (14) verbunden ist, und der mittels mehrerer Schraubverbindungen (26) lösbar am Ventilgehäuse (12) befestigt ist, wobei die Schraubverbindungen (26) jeweils eine Schraube (30), eine den Zwischenflansch (16) in axialer Richtung (a) durchdringende, eine aktorgehäuseseitige Eintrittsöffnung (28E) und eine ventilgehäuseseitige Austrittsöffnung (28A) aufweisende Durchgangsbohrung (28) sowie eine Gewindebohrung (32) im Ventilgehäuse (12) zum Einschrauben der Schraube (30) umfasst, **dadurch gekennzeichnet, dass** die Durchgangsbohrung (28) einen sich ausgehend von der Austrittsöffnung (28A) in axialer Richtung (a) erstreckenden ersten Bohrungsabschnitt (28-1) und einen sich daran anschließenden, in axialer Richtung (a) bis zur Eintrittsöffnung (28E) erstreckenden zweiten Bohrungsabschnitt (28-2) aufweist, wobei der erste Bohrungsabschnitt (28-1) eine Zuführöffnung (34, 36) zum Zuführen der Schraube (30) in die Durchgangsbohrung (28) sowie einen Hinterschnitt (28-3) umfasst, an dem ein Kopf (30-1) der Schraube (30) in axialer Richtung (a) anliegend gehalten ist, und wobei der zweite Bohrungsabschnitt (28-2) einen Durchmesser ($d_{B2}$) aufweist der kleiner als der Durchmesser des Kopfes (30-1) der Schraube (30) ist und der zudem so dimensioniert ist, dass ein zum Schraubantrieb der Schraube (30) formkompatibles Werkzeug einführbar ist.

2. Membranventil (10) nach Anspruch 1, **dadurch gekennzeichnet, dass** die Zuführöffnung in Form einer sich ausgehend von einer inneren Umfangsfläche (16-1) des Zwischenflansches (16) radial nach außen zum ersten Bohrabschnitt (28-1) der Durchgangsbohrung (28) hin erstreckende Ausnehmung (34) ausgebildet ist.

3. Membranventil (10) nach Anspruch 1, **dadurch gekennzeichnet, dass** die Zuführöffnung in Form einer sich ausgehend von einer äußeren Umfangsfläche des Zwischenflansches (16) radial nach innen zum ersten Bohrabschnitt (28-1) der Durchgangsbohrung (28) hin erstreckende Ausnehmung (34) ausgebildet ist.

4. Membranventil (10) nach Anspruch 2 oder 3, **dadurch gekennzeichnet, dass** der Ausnehmung (34) ein Verschlusselement zugeordnet ist, über dass die Ausnehmung (34) verschließbar ist.

5. Membranventil (10) nach Anspruch 1, **dadurch gekennzeichnet, dass** die Zuführöffnung in Form eines sich ausgehend von einer die Austrittsöffnung (28A) aufweisenden Zwischenflanschunterseite (16-2) axial in Richtung zur Eintrittsöffnung (28E) hin erstreckendes Sackloches (36) ausgebildet ist.

6. Membranventil (10) nach Anspruch 4, **dadurch gekennzeichnet, dass** das Sackloch (36) derart in Umfangsrichtung (u) benachbart zum ersten Bohrabschnitt (28-1) der Durchgangsbohrung (28) angeordnet ist, dass die Austrittsöffnung (28A) langlochartig ausgebildet ist.

7. Membranventil (10) nach Anspruch 5, **dadurch gekennzeichnet, dass** der Zwischenflansch (16) zwei langlochartig ausgebildete Austrittsöffnungen (28A) aufweist, die punktsymmetrisch zu einem auf einer Längsachse (L) des Zwischenflansches (16) liegenden Symmetriepunktes (SP) angeordnet sind.

8. Membranventil (10) nach Anspruch 1, **dadurch gekennzeichnet, dass** in axialer Richtung (a) betrachtet die Schraube (30) eine Schraubenlänge (Ls) und der erste Bohrabschnitt (28-1) eine axiale Erstreckung ($L_{B1}$) aufweist, wobei der erste Bohrabschnitt (28-1) in seiner axialen Erstreckung ($L_{B1}$) derart dimensioniert ist, das bezogen auf die Schraubenlänge (Ls) für die Erstreckung ($L_{B1}$) gilt:

$$\text{axiale Erstreckung } (L_{B1}) \text{ / Schraubenlänge } (L_S) \geq 1.$$

9. Membranventil (10) nach Anspruch 1, **dadurch gekennzeichnet, dass** in der Durchgangsbohrung (28) ein Befestigungsmittel (38) angeordnet ist, das so ausgebildet ist, dass der Kopf (30-1) der Schraube (30) positionsgetreu, auf der durch den Hinterschnitt (28-3) gebildeten, axialen Anlagefläche aufliegend, fixiert gehalten ist.

10. Membranventil (10) nach Anspruch 9, **dadurch gekennzeichnet, dass** das Befestigungsmittel in Form einer Halteklammer ausgebildet ist.

11. Membranventil (10) nach Anspruch 9, **dadurch gekennzeichnet, dass** das Befestigungsmittel in Form eines Stopfens (38) ausgebildet ist.

12. Membranventil (10) nach einem der vorgenannten Ansprüche, **dadurch gekennzeichnet, dass** der Schraubantrieb der Schraube (30) als eine Innenantrieb ausgebildet ist.

13. Membranventil (10) nach einem der vorgenannten Ansprüche, **dadurch gekennzeichnet, dass** die erste lösbare Verbindung, mittels der der Zwischenflansch (16) mit dem Aktorgehäuse (14) verbunden ist, in Form einer Überwurfmutter (24) ausgebildet ist.

14. Verfahren zur Befestigung eines Aktorgehäuses (14) eines Membranventils (10) an ein festverbautes Ventilgehäuse (12) des Membranventils (10), wobei das Membranventil (10) nach einem der Ansprüche 1 bis 13 ausgebildet ist, **gekennzeichnet durch** die Verfahrensschritte

a) Zuführen der Schrauben (30) über die Zuführöffnungen (34, 36) in den ersten Bohrungsabschnitt (28-1) der Durchgangsbohrungen (28);
b) Positionieren der Schrauben (30), sodass der Kopf (30-1) der Schrauben (30) jeweils auf dem eine axiale Anlagefläche bildenden Hinterschnitt (18-3) axial aufliegend gehalten sind;
c) Aufsetzen des Zwischenflansches (16) auf das Ventilgehäuse (12);
d) Zuführen eines zum Schraubantrieb der Schraube (30) formkompatibles Werkzeug über eine aktorgehäuseseitige Eintrittsöffnung (28E) zum Kopf (30-1) einer Schraube (30);
e) Festdrehen der Schraube (30) mit dem Werkzeug;
f) Wiederholen der Schritte d) und e) bis alle Schrauben (30) festgedreht sind;
g) Aufsetzen des Aktorgehäuses (14) auf den Zwischenflansch (16) und Befestigen des Aktorgehäuses (14) am Zwischenflansch (16) über die erste lösbare Verbindung (24).

10

14

24

16

12-1

12-2

12

Fig. 1

10

Fig. 2

Fig. 3

Fig. 4

Fig. 5

Fig. 6

Fig. 7

10

16-2

SP

G

G

F

F

30

38

Fig. 8

F-F

28E

28-2

38

30

Fig. 9

G-G

L

28E

28-2

28-1

30-1

30

a

r

Fig. 10

☐-☐

38

30-1

Fig. 11

Europäisches
Patentamt

European
Patent Office

Office européen
des brevets

# EUROPÄISCHER RECHERCHENBERICHT

**Nummer der Anmeldung**

EP 24 16 2194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 134304 A1 (SED FLOW CONTROL GMBH [DE]) 23. Juni 2022 (2022-06-23) | 1,3,14 | INV. F16K7/12 F16K27/02 |
| Y | * Absatz [0046] - Absatz [0059]; Abbildungen 1, 2, 3, 8 * | 2,4-13 | |
| | - - - - - | | |
| Y | US 9 016 307 B2 (MATALON LOUIS E [US]; ITT MFG ENTPR LLC [US]) 28. April 2015 (2015-04-28) | 1-13 | |
| A | * Spalte 3, Zeile 50 - Spalte 4, Zeile 45; Abbildungen 3a, 3b, 3d, 3f, 4c * | 14 | |
| | - - - - - | | |
| Y | EP 4 067 709 A1 (GEMUE GEBR MUELLER APPBAU GMBH & CO KG [DE]) 5. Oktober 2022 (2022-10-05) | 1-13 | |
| A | * Absatz [0047] - Absatz [0062]; Abbildungen 1-5 * | 14 | |
| | - - - - - | | |
| Y | US 8 388 256 B2 (ATKINS JAMES [GB]; TELFER GEORGE [GB] ET AL.) 5. März 2013 (2013-03-05) | 1-13 | |
| A | * Spalte 5, Zeile 34 - Spalte 7, Zeile 15; Abbildungen 1-4 * | 14 | **RECHERCHIERTE SACHGEBIETE (IPC)** |
| | - - - - - | | F16K |
| A | EP 3 333 465 B1 (GEMUE GEBR MUELLER APPBAU GMBH & CO KG [DE]) 4. September 2019 (2019-09-04) * Absatz [0033] - Absatz [0046]; Abbildungen 1-4, 9 * | 1-14 | |
| | - - - - - | | |

Der vorliegende Recherchenbericht wurde für alle Patentansprüche erstellt

| Recherchenort | Abschlußdatum der Recherche | Prüfer |
|---|---|---|
| Den Haag | 28. Juni 2024 | Silea, Cristian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 4 428 410 A1

## ANHANG ZUM EUROPÄISCHEN RECHERCHENBERICHT
## ÜBER DIE EUROPÄISCHE PATENTANMELDUNG NR.

EP 24 16 2194

28-06-2024

| Im Recherchenbericht angeführtes Patentdokument | Datum der Veröffentlichung | Mitglied(er) der Patentfamilie | Datum der Veröffentlichung |
|---|---|---|---|
| DE 102020134304 A1 | 23-06-2022 | DE 102020134304 A1 | 23-06-2022 |
| | | EP 4264092 A1 | 25-10-2023 |
| | | WO 2022128640 A1 | 23-06-2022 |
| US 9016307 B2 | 28-04-2015 | EP 2875266 A1 | 27-05-2015 |
| | | MX 357260 B | 03-07-2018 |
| | | MX 364089 B | 12-04-2019 |
| | | US 2014020769 A1 | 23-01-2014 |
| | | WO 2014015326 A1 | 23-01-2014 |
| EP 4067709 A1 | 05-10-2022 | DE 102021108093 A1 | 06-10-2022 |
| | | EP 4067709 A1 | 05-10-2022 |
| US 8388256 B2 | 05-03-2013 | GB 2417539 A | 01-03-2006 |
| | | GB 2430963 A | 11-04-2007 |
| | | NO 335709 B1 | 26-01-2015 |
| | | NO 336752 B1 | 26-10-2015 |
| | | US 2008145139 A1 | 19-06-2008 |
| | | US 2013174408 A1 | 11-07-2013 |
| | | WO 2006021771 A1 | 02-03-2006 |
| EP 3333465 B1 | 04-09-2019 | DE 102016123606 A1 | 07-06-2018 |
| | | EP 3333465 A1 | 13-06-2018 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202014102658 U1
- DE 102020134305 A1